# EUROPÄISCHE PATENTANMELDUNG

(11) **EP 1 659 784 A1**
(43) Veröffentlichungstag der Anmeldung: **24.05.2006**
(21) Anmeldenummer: 05077499.1
(22) Anmeldetag: 31.10.2005
(51) Int. Cl.: H04N 5/253

(54) **Filmscanner und ein Scanverfahren zum Unterdrücken von Helligkeitsschwankungen einer Strahlungsquelle**

(30) Priorität: 19.11.2004 DE 102004056722
(71) Anmelder: Deutsches Zentrum für Luft- und Raumfahrt e.V., 53175 Bonn (DE)
(72) Erfinder: Uhlig, Mathias, 12683 Berlin (DE); Eckardt, Andreas, Dr., 12524 Berlin (DE); Neidhardt, Michael, 15537 Erkner (DE)
(74) Vertreter: Effert, Bressel und Kollegen

(57) **Zusammenfassung**

Die Erfindung betrifft einen Filmscanner (1) und ein Scanverfahren zum Unterdrücken von Helligkeitsschwankungen einer Strahlungsquelle. Der Filmscanner (1) zum Digitalisieren eines Films (2) umfasst eine stabilisierte Strahlungsquelle (4), zum Erzeugen von Licht (5), mit dem Ausschnitte des Films (2) ausleuchtbar sind, eine Filmbühne (3) zum Führen des Films (2), eine Abbildungsoptik (6) und einen lichtempfindlichen Sensor (7) zum Digitalisieren der ausgeleuchteten Ausschnitte des Films (2), die mit Hilfe der Abbildungsoptik (6) auf den lichtempfindlichen Sensor (7) abbildbar sind, in digitale Bilddaten. Der Filmscanner (1) weist zusätzlich einen lichtempfindlichen Referenzsensor zum Messen von Helligkeitsschwankungen der Strahlungsquelle (4) und Bestimmen von Helligkeitsmesswerten auf.

## Beschreibung

Die Erfindung betrifft einen Filmscanner nach dem Oberbegriff des Patentanspruchs 1 und ein Scanverfahren nach dem Oberbegriff des Patentanspruchs 10.

Bei einem Filmscanner wird ein Film an einer Strahlungsquelle vorbei über eine Filmbühne geführt. Licht einer Strahlungsquelle leuchtet einen Ausschnitt des Films aus. Mit Hilfe einer Abbildungsoptik wird der ausgeleuchtete Ausschnitt des Films auf einen lichtempfindlichen Sensor abgebildet und digitalisiert. Als lichtempfindliche Sensoren werden beispielsweise CCD- oder CMOS-Zeilen oder Matrix-Anordnungen oder andere lichtsensitive Anordnungen verwendet.

Ein Anwendungsgebiet für Filmscanner ist das Digitalisieren von Filmen zur Archivierung. Bei einer Digitalisierung von wissenschaftlichen Aufnahmen ist eine möglichst verlustfreie Digitalisierung erforderlich. Um radiometrische Informationen, die in Filmaufnahmen enthalten sind, nahezu verlustfrei zu erhalten, ist eine radiometrische Auflösung von 12-Bit, d. h., eine Abtastung der Helligkeitswerte mit einer Abtasttiefe von mindestens 12-Bit (0,02 %), erforderlich. Diese Abtastung der Helligkeitswerte wird durch Helligkeitsschwankungen der Strahlungsquelle beeinflusst.

Gegenwärtig verfügbare sehr gute Strahlungsquellen (HQI-, Xenon-, Halogen-Lichtquellen usw.) bieten eine große Lichtmenge, besitzen jedoch nur eine begrenzte Helligkeitskonstanz von etwa 0,3 % bis 1 %. Die Helligkeitsschwankungen werden hauptsächlich durch Spannungsschwankungen der Spannungsversorgung der Strahlungsquelle und auch durch thermische Veränderungen in der Umgebung der Strahlungsquelle verursacht. Sehr gute Spannungsversorgungen besitzen eine Restwelligkeit von etwa 0,1 %, welche jedoch Helligkeitsschwankungen von etwa 0,3 % der Strahlungsquelle bewirkt. Alternativ oder zusätzlich besteht die Möglichkeit, den Strom der Strahlungsquelle zu regeln. Jeder Regelkreis besitzt jedoch eine Regelzeitkonstante, so dass auch bei stromgeregelten Strahlungsquellen Helligkeitsschwankungen auftreten.

Der Erfindung liegt das technische Problem zugrunde, einen Filmscanner und ein Scanverfahren zu schaffen, die beim Digitalisieren eines Films Daten liefern, die die nahezu vollständige radiometrische Information des Films enthalten.

Das technische Problem wird durch einen Gegenstand mit den Merkmalen des Patentanspruchs 1 sowie ein Scanverfahren mit den Merkmalen des Patentanspruchs 10 gelöst. Weitere vorteilhafte Ausgestaltungen der Erfindung ergeben sich aus den Unteransprüchen.

Beim Scannen eines Films wird der Film über eine Filmbühne an einer Strahlungsquelle vorbeigeführt. Die Strahlungsquelle erzeugt Licht, mit dem Ausschnitte des Films ausgeleuchtet und mit einer Abbildungsoptik auf mindestens einen lichtempfindlichen Sensor abgebildet werden. Der lichtempfindliche Sensor digitalisiert die abgebildeten ausgeleuchteten Ausschnitte des Films. Hierbei werden digitale Bilddaten erzeugt. Ein lichtempfindlicher Referenzsensor misst Helligkeitsschwankungen der Strahlungsquelle und bestimmt Helligkeitsmesswerte. Hierdurch werden mehrere Vorteile erreicht. Die digitalen Bilddaten und die Helligkeitsmesswerte enthalten die vollständige radiometrische Information des Films und können einfach archiviert werden. Ferner können die Helligkeitsmesswerte verwendet werden, um die digitalen Bilddaten bezüglich der Helligkeit der Strahlungsquelle zu korrigieren bzw. normieren. Anhand der Helligkeitsmesswerte kann ebenso die Qualität der Strahlungsquelle beurteilt werden. Hierdurch ist es möglich, frühzeitig Schäden beispielsweise an der Spannungsversorgung oder einer Stromregeleinheit der Strahlungsquelle zu erkennen. Auch Störungen in der Umgebung der Strahlungsquelle während des Scanvorgangs, beispielsweise Temperaturschwankungen, die zu einer Änderung der Helligkeit der Strahlungsquelle geführt haben, können so schnell erkannt werden.

Eine vorteilhafte Weiterbildung der Erfindung sieht eine Korrektureinheit zum Korrigieren der digitalen Bilddaten gemäß der bestimmten Helligkeitsmesswerte vor. So werden korrigierte bzw. normierte digitale Bilddaten erhalten, die einer weiteren Bearbeitung und Auswertung zugeführt werden können. Die Informationen über Helligkeitsunterschiede in den korrigierten digitalen Bilddaten spiegeln Informationen wieder, die in dem abgetasteten Film enthalten sind. Die korrigierten digitalen Bilddaten enthalten die volle Information des abgetasteten Films. Die Helligkeitsmesswerte müssen folglich nicht mit archiviert werden, was zu einer Verringerung des benötigten Speicherplatzes führt.

Bei einer besonders kompakten Ausführungsform der Erfindung ist der lichtempfindliche Referenzsensor ein Teil des lichtempfindlichen, vorzugsweise zeilenförmigen Sensors. Diese Ausführungsform weist ferner den Vorteil auf, dass die Helligkeitsmesswerte synchron mit den digitalen Bilddaten erzeugt werden. Hierdurch ist eine Eins-zu-eins-Zuordnung der Helligkeitsmesswerte und der digitalen Bilddaten gegeben, was eine Korrektur der digitalen Bilddaten stark vereinfacht. Ferner liegen die Helligkeitsmesswerte und die digitalen Bilddaten in der gleichen Form von einem Messsensor vor, was ebenfalls eine weitere Verarbeitung erleichtert und beschleunigt. Möglicherweise bei der Digitalisierung auftretende systematische Fehler, die auf den lichtempfindlichen zeilenförmigen Sensor zurückzuführen sind, heben sich beim Normieren der digitalen Bilddaten gegenseitig auf.

Eine besonders vorteilhafte Weiterbildung sieht vor, dass die Strahlungsquelle, die Abbildungsoptik und der Referenzsensor so angeordnet sind, dass ein Teil des Lichts der Strahlungsquelle mit Hilfe der Abbildungsoptik auf den Referenzsensor abbildbar ist, ohne das der Teil des Lichts den Film durchleuchtet. Vorteilhaft ist, dass das Licht für die Helligkeitsmessung denselben Strahlengang wie das Licht durchläuft, das die Ausschnitte des Films auf den lichtempfindlichen Sensor abbildet. Auf diese Weise wirken sich Änderungen der Abbildungsoptik sowohl auf die digitalen Bilddaten als auch auf die Helligkeitsmesswerte aus. Ferner führt diese Weiterbildung zu einem kompakten Aufbau, da eine weitere Abbildungsoptik eingespart wird, die bei anderen Ausführungsformen zum Abbilden des Lichts der Strahlungsquelle auf den Referenzsensor benötigt wird.

Um eine weitere Steigerung der radiometrischen Auflösung zu erreichen, ist eine hohe Stabilität sowohl des lichtempfindlichen Sensors als auch des Referenzsensors wünschenswert. Diese erreicht man, indem man die Sensoren temperaturstabilisiert. Daher sieht eine besonders hochauflösende Ausführungsform der Erfindung vor, dass der lichtempfindliche Sensor und/oder der Referenzsensor eine thermische Stabilisierungseinheit aufweisen. Werden die Sensoren mit der thermischen Stabilisierungseinheit gekühlt, so sinkt beispielsweise bei CCD- oder CMOS-Zeilenanordnungen und anderen halbleiterbasierten Sensoren ein Dunkelrauschen, was die radiometrische Auflösung weiter steigert.

Eine weitere Verbesserung der radiometrischen Auflösung erreich man mit einer Ausführungsform der Erfindung, die eine Dunkelrauschkorrektureinheit mit einer Mittelwertbildungseinheit zum Bestimmen eines Referenzwerts eines Dunkelrauschens des lichtempfindlichen Sensors mittels einer Mittelwertbildung von Dunkelrauschmesswerten nicht bestrahlter Pixel des lichtempfindlichen Sensors und einem Subtrahierer zum Subtrahieren des Referenzwertes des Dunkelrauschens von den digitalen Bilddaten aufweist.

Einzelne Pixel des lichtempfindlichen Sensors besitzen in der Regel eine unterschiedliche Empfindlichkeit. In einer Pixelempfindlichkeits-Ungleichförmigkeits-Kalibrierung kann für jedes Pixel ein Korrekturwert vorab bestimmt werden. Um die unterschiedliche Empfindlichkeit zu berücksichtigen und auszugleichen, sieht eine Weiterbildung der Erfindung eine Empfindlichkeitskorrektureinheit vor, die einen Speicher, aus dem für jedes Pixel ein vorbekannter Korrekturwert für eine Pixelempfindlichkeits-Ungleichförmigkeit des lichtempfindlichen Sensors abrufbar ist, und einen Multiplizierer zum Multiplizieren der vorbekannten Korrekturwerte mit den digitalen Bilddaten umfasst.

Bei einem Einsatz eines pixelierten Sensors als Referenzsensor ist eine Ausführungsform der Erfindung vorteilhaft, die eine weitere Mittelwertbildungseinheit zum Bestimmen eines Helligkeitsreferenzwertes aus den Helligkeitsmesswerten mehrerer Pixel des Referenzsensors mittels einer Mittewertbildung und einen weiteren Multiplizierer zum Multiplizieren des Helligkeitsreferenzwertes mit den digitalen Bilddaten umfasst. Diese Ausführungsform weist den Vorteil auf, dass mehrere redundante Messwerte für die Helligkeit der Strahlungsquelle gemessen werden. Dies erhöht die Zuverlässigkeit der Bestimmung der Helligkeitsmesswerte. Ferner nutzt diese Ausführungsform eine besonders einfache Korrektur, bei der lediglich eine Multiplikation der digitalen Bilddaten mit dem Helligkeitsreferenzwert, der sich aus dem Mittelwert der Helligkeitsmesswerte bestimmen lässt, ausgeführt werden muss. Multiplikationen sind einfach und sehr genau ausführbar.

Bei einer Ausführungsform der Erfindung ist die Korrektureinheit als Software und/oder als Hardware ausgeführt. Bei der Ausführung als Hardware liegen die korrigierten digitalen Bilddaten sofort vor. Ferner brauchen die Helligkeitsmesswerte nicht mit archiviert zu werden, was zu einer Reduktion der Datenmenge führt. Eine Ausführung in Software ermöglicht eine nachträgliche Kontrolle der Helligkeitsschwankungen. Ferner kann die "eigentliche Scannereinheit" des Filmscanners kompakter gestaltet werden, da sie keine Elektronikkomponenten für die Korrektureinheit aufnehmen muss.

Die Merkmale der Weiterbildungen des erfindungsgemäßen Scanverfahrens weisen dieselben Vorteile wie die entsprechenden Merkmale des Filmscanners auf.

Die Erfindung wird im Folgenden anhand eines Ausführungsbeispiels näher erläutert. Hierbei zeigen:
- Figur 1: eine schematische Ansicht eines Filmscanners;
- Figur 2: eine perspektivische Ansicht eines lichtempfindlichen zeilenförmigen Sensors mit einer thermischen Stabilisierungseinheit;
- Figur 3: einen Graphen zur Veranschaulichung von errechneten Korrekturwerten bei unterschiedlicher gemessener Helligkeit der Strahlungsquelle;
- Figur 4: eine schematische Skizze für eine Schaltung zum Korrigieren gemessener digitaler Bilddaten.

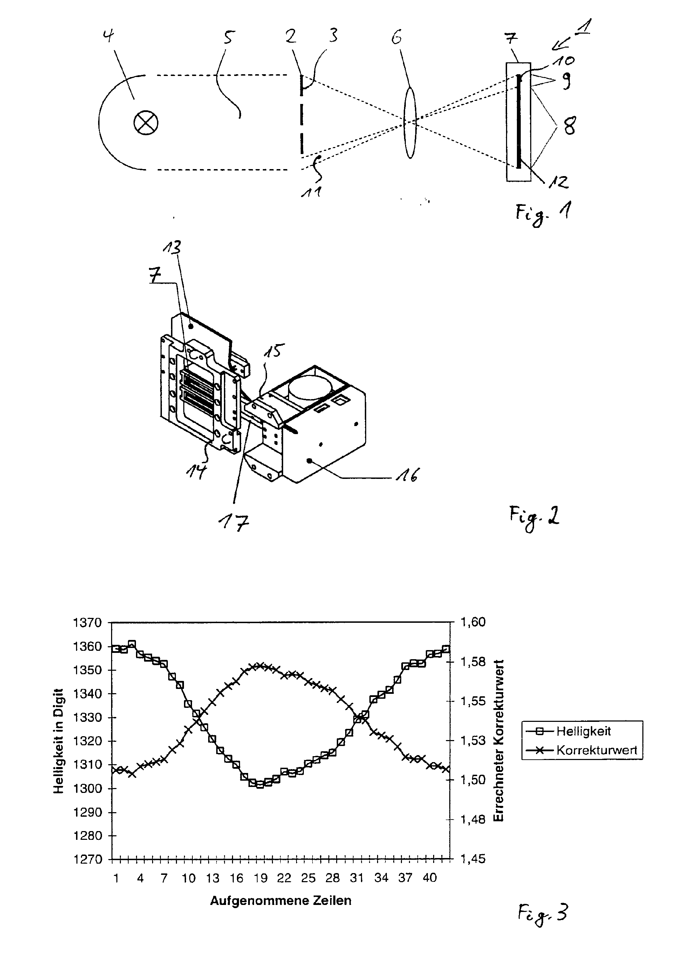

Figur 1 zeigt einen schematischen Aufbau eines Filmscanners 1. Ein Film 2 wird über eine Filmbühne 3 an einer Strahlungsquelle 4 vorbei geführt. Die Strahlungsquelle 4 erzeugt Licht 5, das jeweils einen vorzugsweise zeilenförmigen Ausschnitt des Films 2 ausleuchtet. Mit einer Abbildungsoptik 6 wird der ausgeleuchtete Ausschnitt des Films 2 auf einen lichtempfindlichen zeilenförmigen Sensor 7 abgebildet. Der lichtempfindliche zeilenförmige Sensor 7 umfasst eine CCD- oder CMOS-Zeilenanordnung 12 oder eine andere lichtempfindliche Zeilenanordnung. Der lichtempfindliche zeilenförmige Sensor 7 digitalisiert den abgebildeten ausgeleuchteten Ausschnitt des Films 2 und erzeugt hierbei digitale Bilddaten.

Der ausgeleuchtete Ausschnitt des Films 2 wird nur auf einen Messabschnitt 8 des lichtempfindlichen zeilenförmigen Sensors 7 bzw. der CCD- oder CMOS-Zeilenanordnung 12 abgebildet. Ein Referenzabschnitt 9 des lichtempfindlichen zeilenförmigen Sensors 7 bzw. der CCD- oder CMOS-Zeilenoanordnung 12 dient als lichtempfindlicher Referenzsensor 10. Auf den Referenzsensor 10 wird ein Teil 11 des Lichts 5, ohne den Film 2 zu durchleuchten, mit Hilfe der Abbildungsoptik 6 abgebildet. Der Referenzsensor 10 misst Helligkeitswerte der Strahlungsquelle 4. Die mit Hilfe des Referenzsensors 10 bestimmten Helligkeitsmesswerte enthalten gemeinsam mit den digitalen Bilddaten ausreichende Informationen, um den Film nahezu verlustfrei digital Speichern zu können. Helligkeitsschwankungen der Strahlungsquelle 4 können durch eine Korrektur aus den digitalen Bilddaten herausgerechnet werden, was eine Unterdrückung der Helligkeitsschwankungen bedeutet.

In der Figur 2 ist perspektivisch eine Fokalebene 14 dargestellt, auf der mehrere zeilenförmige Sensoren 7 angeordnet sind. Die zeilenförmigen Sensoren 7 umfassen dabei jeweils ein Gehäuse und mindestens eine CCD- oder CMOS-Zeile. Die Fokalebene 14 besteht aus einem gut wärmeleitenden und zum Gehäuse der zeilenförmigen Sensoren 7 ausdehnungskapatiblen Grundkörper, wobei auf der Rückseite der Fokalebene die Sensorelektronik 13 angeordnet ist. Die zeilenförmigen Sensoren 7 sind dabei vorzugsweise direkt mit der Signalelektronik 13 verbunden. Die Fokalebene 14 ist mit einer thermischen Stabilisierungseinheit 16 verbunden, wobei hierzu beispielsweise die thermische Kopplung über Wärmeleitrohre 17 erfolgt. Alle Pixel des lichtempfindlichen zeilenförmigen Sensors 7 befinden sich auf einer Temperatur, so dass ein thermisch bedingtes Dunkelrauschen für alle als gleich angenommen werden kann. Wird der lichtempfindliche zeilenförmige Sensor 7 in einem Filmscanner nach Figur 1 eingesetzt, so befinden sich sowohl die Pixel des Referenzabschnitts 9, die dem Referenzsensor 10 zuzuordnen sind, als auch die Pixel des Messabschnitts 8, die zum Digitalisieren des abgebildeten ausgeleuchteten Ausschnitts des Films 2 verwendet werden, auf derselben Temperatur.

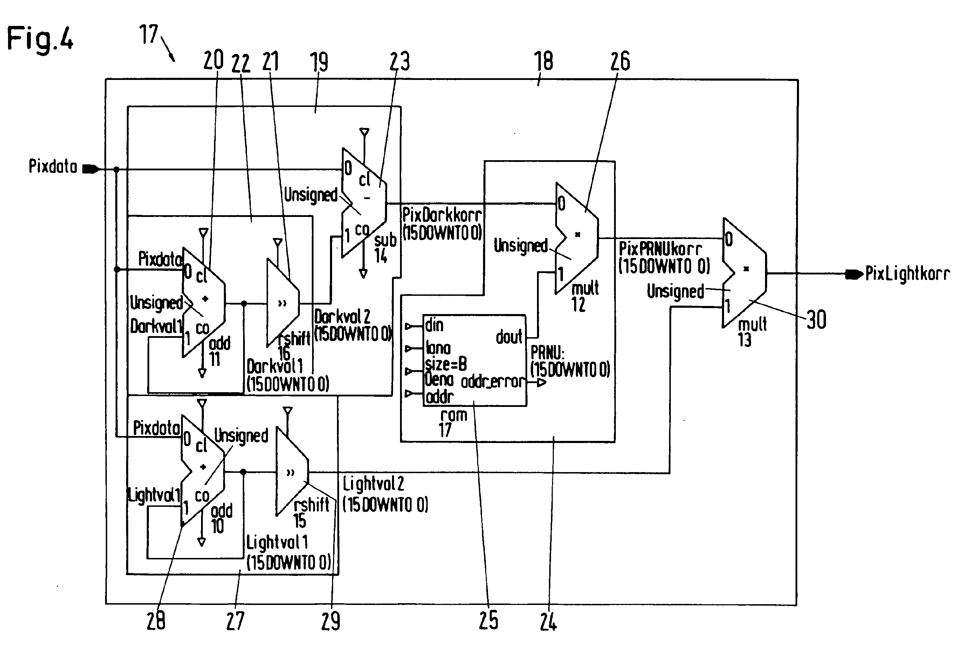

Figur 3 zeigt einen Graphen, in dem gemittelte Helligkeitsmesswerte des Referenzabschnitts als Quadrate gegen die aufgenommene Zeilenzahl aufgetragen sind. Es zeigt sich, dass die Helligkeit der Strahlungsquelle mit einer Sinusschwingung moduliert ist. Als Kreuze sind errechnete Korrekturwerte gegen die aufgenommene Zeilenzahl aufgetragen. Steigt die Helligkeit der Strahlungsquelle, so sinkt der Korrekturwert und umgekehrt.

In Figur 4 ist eine schematische Skizze einer Schaltung 17 zum Korrigieren der digitalen Bilddaten, die mit dem Messabschnitt 8 des Filmscanners 1 nach Figur 1 digitalisiert wurden, mit Hilfe einer Korrektureinheit 18 dargestellt. Es wird davon ausgegangen, dass der lichtempfindliche zeilenförmige Sensor 7 einen Dunkelreferenzabschnitt (nicht dargestellt) besitzt, in dem Pixel nicht bestrahlt werden. Dunkelrauschmesswerte, die mit den beispielsweise abgedeckten Pixeln gemessen werden, werden mittels einer Dunkelrauschkorrektureinheit 19 verarbeitet. Diese umfasst einen Addierer 20 und ein Schieberegister 21, die zusammen eine Mittelwertbildungseinheit 22 bilden. Mit Hilfe der Mittelwertbildung wird ein Referenzwert des Dunkelrauschens bestimmt, der mittels eines Subtrahierers 23 der Dunkelrauschkorrektureinheit 19 von den digitalen Bilddaten abgezogen wird.

Eine so erhaltene Differenz wird in eine Empfindlichkeitskorrektureinheit 24 eingegeben. Diese umfasst einen Speicher 25, in dem für jedes Pixel des Messabschnitts 8 vorab bestimmte, also vorbekannte Korrekturwerte für eine Pixelempfindlichkeits-Ungleichförmigkeit abgespeichert sind. Diese werden abgerufen und mit Hilfe eines Multiplizierers 26 mit der jeweils erhaltenen Differenz multipliziert.

Ein erhaltenes Produkt wird gemeinsam mit den Helligkeitsmesswerten der Pixel des Referenzabschnitts 9 in der Korrektureinheit 18 weiter verarbeitet. Aus den Helligkeitsmesswerten wird mittels einer weiteren Mittelwertbildungseinheit 27, die einen weiteren Addierer 28 und ein weiteres Schieberegister 29 umfasst, ein Mittelwert gebildet, mit dem ein Helligkeitsreferenzwert ermittelt wird. Der Helligkeitsreferenzwert, der den Korrekturwert nach Figur 3 darstellt, wird mittels eines weiteren Multiplizierers 30 mit dem erhaltenen Produkt multipliziert, um digitale Bilddaten zu erhalten, in denen Helligkeitsschwankungen der Strahlungsquelle 4 unterdrückt sind.

Werden beim Digitalisieren mehrere spektrale Kanäle verwendet, so weist der Filmscanner 1 nach Figur 1 für jeden spektralen Kanal eine Schaltung 17 nach Figur 4 auf. Mehrere spektrale Kanäle können beispielsweise durch verschiedene Filter vor den zeilenförmigen Sensoren 7 realisiert werden.

Die Korrektureinheit 18 kann so ausgestaltet sein, dass sie die Dunkelrauschkorrektureinheit 19 und die Empfindlichkeitskorrektureinheit 24 umfasst. Sie kann ganz oder teilweise in Software ausgeführt sein oder, wie in Figur 4 angedeutet ist, vollständig als Hardwareschaltung ausgeführt sein.

Abweichend von der bisher beschriebenen Ausführungsform können die Dunkelrauschkorrektureinheit 19 und die Empfindlichkeitskorrektureinheit 24 auch als getrennte Schaltungen ausgeführt sein. Ferner kann der Referenzsensor bei einer Ausführungsform ein von dem lichtempfindlichen zeilenförmigen Sensor getrennter eigenständiger lichtempfindlicher Sensor sein, auf den das Licht der Strahlungsquelle beispielsweise mit Hilfe einer optischen Faser abgebildet wird.

## Patentansprüche

1. Filmscanner (1) zum Digitalisieren eines Films (2) mit einer stabilisierten Strahlungsquelle (4), zum Erzeugen von Licht (5), mit dem Ausschnitte des Films (2) ausleuchtbar sind, einer Filmbühne (3) zum Führen des Films (2), einer Abbildungsoptik (6) und vorzugsweise einem lichtempfindlichen Sensor (7) zum Digitalisieren der ausgeleuchteten Ausschnitte des Films (2), die mit Hilfe der Abbildungsoptik (6) auf den lichtempfindlichen Sensor (7) abbildbar sind, in digitale Bilddaten,
**gekennzeichnet durch**
einen lichtempfindlichen Referenzsensor zum Messen von Helligkeitsschwankungen der Strahlungsquelle (4) und Bestimmen von Helligkeitsmesswerten.

2. Filmscanner (1) nach Anspruch 1, **gekennzeichnet durch** eine Korrektureinheit (18) zum Korrigieren der digitalen Bilddaten gemäß den bestimmten Helligkeitsmesswerten.

3. Filmscanner (1) nach Anspruch 1 oder 2, **dadurch gekennzeichnet, dass** der lichtempfindliche Referenzsensor (10) ein Teil des lichtempfindlichen Sensors (7) ist.

4. Filmscanner (1) nach einem der vorangegangenen Ansprüche, **dadurch gekennzeichnet, dass** die Strahlungsquelle (4), die Abbildungsoptik (6) und der Referenzsensor (10) so angeordnet sind, dass ein Teil (11) des Lichts (5) der Strahlungsquelle (4) mit Hilfe der Abbildungsoptik (6) auf den Referenzsensor (10) abbildbar ist, ohne das der Teil (11) des Lichts (5) den Film (2) durchleuchtet.

5. Filmscanner (1) nach einem der vorangegangenen Ansprüche, **dadurch gekennzeichnet, dass** dem lichtempfindlichen Sensor (7) und/oder der Referenzsensor (10) eine thermische Stabilisierungseinheit (16) zugeordnet ist.

6. Filmscanner (1) nach einem der vorangegangenen Ansprüche, **gekennzeichnet durch** eine Dunkelrauschkorrektureinheit (19) mit einer Mittelwertbildungseinheit (22) zum Bestimmen eines Referenzwerts eines Dunkelrauschens des lichtempfindlichen Sensors (7) mittels einer Mittelwertbildung von Dunkelrauschmesswerten nicht bestrahlter Pixel des lichtempfindlichen Sensors (7) und einem Subtrahierer (23) zum Subtrahieren des Referenzwertes des Dunkelrauschens von den digitalen Bilddaten.

7. Filmscanner (1) nach einem der vorangegangenen Ansprüche, **gekennzeichnet durch** eine Empfindlichkeitskorrektureinheit (24), die einen Speicher (25), aus dem für jedes Pixel ein vorbekannter Korrekturwert für eine Pixelempfindlichkeits-Ungleichförmigkeit des lichtempfindlichen Sensors (7) abrufbar ist, und einen Multiplizierer (26) zum Multiplizieren der vorbekannten Korrekturwerte mit den digitalen Bilddaten umfasst.

8. Filmscanner (1) nach einem der vorangegangenen Ansprüche, **gekennzeichnet durch** eine weitere Mittelwertbildungseinheit zum Bestimmen eines Helligkeitsreferenzwertes aus den Helligkeitsmesswerten mehrerer Pixel des Referenzsensors (10) mittels einer Mittelwertbildung und einem weiteren Multiplizierer (30) zum Multiplizieren des Helligkeitsreferenzwertes mit den digitalen Bilddaten.

9. Filmscanner (1) nach einem der Ansprüche 2 bis 8, **dadurch gekennzeichnet, dass** die Korrektureinheit (18) als Software und/oder als Hardware ausgeführt ist.

10. Scanverfahren zum Unterdrücken von Helligkeitsschwankungen einer Strahlungsquelle (4) beim Digitalisieren eines Films (2) mit einem Filmscanner (1), wobei die Strahlungsquelle (4) Licht (5) erzeugt und das Licht (5) Ausschnitte des Films (2), der über eine Filmbühne (3) geführt wird, ausgeleuchtet und mit einer Abbildungsoptik (6) auf einen lichtempfindlichen Sensor (7) abgebildet, der die abgebildeten ausgeleuchteten Ausschnitte des Films (2) digitalisiert und hierbei digitale Bilddaten erzeugt
**dadurch gekennzeichnet, dass**
ein Referenzsensor (10) Helligkeitsschwankungen der Strahlungsquelle (4) misst und Helligkeitsmesswerte bestimmt.

11. Scanverfahren nach Anspruch 10, **dadurch gekennzeichnet, dass** die digitalen Bilddaten gemäß der bestimmten Helligkeitsmesswerte korrigiert werden.

12. Scanverfahren nach Anspruch 10 oder 11, **dadurch gekennzeichnet, dass** ein Teil (11) des Lichts (5) der Strahlungsquelle (4), ohne den Film (2) zu durchleuchten, mit Hilfe der Abbildungsoptik (6) auf den Referenzsensor (10) abgebildet wird.

13. Scanverfahren nach Anspruch 10 oder 11, **dadurch gekennzeichnet, dass** ein Teil des Lichts (5) der Strahlungsquelle (4) mit Hilfe einer lichtleitenden Optik auf den Referenzsensor (10) abgebildet wird.

14. Scanverfahren nach einem der Ansprüche 10 bis 13, **dadurch gekennzeichnet, dass** das der lichtempfindliche Sensor (7) und/oder der Referenzsensor (10) thermisch stabilisiert werden.

15. Scanverfahren nach einem der Ansprüche 10 bis 14, **dadurch gekennzeichnet, dass** das Digitalisieren des Ausschnitts des Films (2) und das Messen der Helligkeitsschwankungen zeitgleich mit dem lichtempfindlichen Sensor (7) ausgeführt werden.

16. Scanverfahren nach einem der Ansprüche 10 bis 15, **dadurch gekennzeichnet, dass** bei der Korrektur der digitalen Bilddaten ein Dunkelrauschen des lichtempfindlichen Sensors (7) sowie eine Pixelempfindlichkeits-Ungleichförmigkeit des lichtempfindlichen Sensors (7) berücksichtigt werden.

17. Scanverfahren nach Anspruch 16, **dadurch gekennzeichnet, dass** die digitalen Bilddaten mehrere Spektralkanäle umfassen und die Korrektur der digitalen Bilddaten für einen jeden Spektralkanal erfolgt, indem
a. ein Helligkeitsreferenzwert mittels einer Mittelwertbildung von Helligkeitsmesswerten mehrerer Pixel des Referenzsensors (10) bestimmt wird,
b. ein Referenzwert eines Dunkelrauschens des lichtempfindlichen Sensors (7) mittels einer Mittelwertbildung von Dunkelrauschmesswerten nicht bestrahlter Pixel des lichtempfindlichen Sensors (7) bestimmt wird,
c. für jedes Pixel der digitalen Bilddaten der Referenzwert des Dunkelrauschens subtrahiert wird,
d. eine erhaltene Differenz mit einem für jedes Pixel vorbekannten und aus einem Speicher abgerufenen Korrekturwert für eine Pixelempfindlichkeits-Ungleichförmigkeit des lichtempfindlichen Sensors (7) multipliziert wird und
e. ein so erhaltenes Produkt für jedes Pixel mit dem Helligkeitsreferenzwert multipliziert wird.

18. Scanverfahren nach einem der Ansprüche 10 bis 17, **dadurch gekennzeichnet, dass** das die Korrektur der digitalen Bilddaten mit Hilfe einer Software und/oder einer fest verdrahteten elektronischen Schaltung ausgeführt wird.
